# DEMANDE DE BREVET EUROPEEN

(11) **EP 0 554 176 A1**
(43) Date de publication de la demande: **04.08.1993**
(21) Numéro de dépôt: 93400207.2
(22) Date de dépôt: 28.01.1993
(51) Int. Cl.: G01D 5/26

(54) **Procédé d'obtention d'un capteur à fibre optique précontrainte et dispositif pour sa mise en oeuvre**

(30) Priorité: 29.01.1992 FR 9200952
(71) Demandeur: ALCATEL CABLE, F-92111 Clichy Cédex (FR)
(72) Inventeur: Com-Nougue, Jacques, F-75012 Paris (FR); Kerrand, Emmanuel, F-91100 Villabe (FR); Boby, Joel, F-93370 Montfermeil (FR)
(74) Mandataire: Buffiere, Michelle

(57) **Abrégé**

L'invention concerne un procédé d'obtention d'un capteur à fibre optique précontrainte, le capteur comportant deux bandes métalliques (2, 3) superposées engainant une fibre optique (1), les bandes étant fixées l'une à l'autre selon leurs bords latéraux pour constituer une gaine exerçant une précontrainte sur la fibre optique, le procédé étant caractérisé en ce qu'il comprend :
- une étape de superposition des bords latéraux des bandes avec alignement des tranches des bandes, la superposition des bords étant réalisée de façon à obtenir, après la fixation des bords, une précontrainte déterminée sur la fibre optique,
- une étape de soudage des bandes entre elles de façon à unir les tranches adjacentes après superposition des bords latéraux, le soudage étant réalisé simultanément de chaque côté des bandes et avec le même apport d'énergie.

L'invention concerne également un dispositif de mise en oeuvre du procédé et le capteur à fibre optique précontrainte obtenu.

## Description

L'invention concerne un procédé d'obtention d'un capteur à fibre optique précontrainte et un dispositif pour sa mise en oeuvre.

On connaît un capteur à fibre optique précontrainte constitué de deux bandes métalliques engainant une fibre optique, les bandes étant fixées l'une à l'autre selon leurs bords latéraux pour constituer une gaine exerçant une précontrainte radiale sur la fibre optique. La précontrainte est due à la pression exercée sur la fibre par les bandes métalliques tendues transversalement avant leur fixation. Un tel capteur peut être utilisé pour le contrôle du trafic routier si on le dispose transversalement à la route.

Un tel capteur reste pour l'instant du domaine du laboratoire. Pour sa réalisation pratique on peut employer une fibre optique de 125 µm de diamètre, des bandes métalliques de 76 à 80 µm d'épaisseur pour une largeur de 1 cm et une longueur d'environ 4 m.

La fixation des bandes métalliques entre elles selon leurs bords latéraux assure la précontrainte de la fibre optique. La réponse du capteur dépend de la variation de la précontrainte exercée sur la fibre optique. La méthode de fixation des bandes doit permettre d'obtenir une précontrainte uniforme sur toute la longueur du capteur, ceci à cause des faibles épaisseurs des bandes métalliques et du diamètre de la fibre optique.

La fixation des bandes entre elles par une soudure non symétrique dans les deux bandes constituant la gaine induit des contraintes génératrices de déformations et des dissymétries et par conséquent des modifications de l'état de précontrainte. Il faut, pour que la précontrainte soit uniforme et symétrique, que la liaison des bandes soit continue et régulière.

La demanderesse a aussi constaté qu'il est nécessaire de rendre étanches les tranches du capteur. Ceci supprime les risques de corrosion entre les deux bandes, ce qui occassionnerait des fissures dans le cordon de soudure. Ceci est d'autant plus important si le capteur est utilisé pour le contrôle du traffic routier. Il est alors soumis à des contraintes sévères dues aux variations importantes de température, à l'humidité, au salage des routes et aux autres formes de pollution.

Pour satisfaire toutes ces exigences, on propose selon la présente invention d'obtenir la fixation des deux bandes entre elles par soudage des bandes après que les bords latéraux des bandes aient été superposés et que les tranches aient été alignées. Pour éviter toute dissymétrie ou déformation, le soudage est réalisé simultanément des deux côtés des bandes et avec le même apport d'énergie. La soudure obtenue unit les tranches des bandes.

L'invention a donc pour objet un procédé d'obtention d'un capteur à fibre optique précontrainte, le capteur comportant deux bandes métalliques superposées engainant une fibre optique, les bandes étant fixées l'une à l'autre selon leurs bords latéraux pour constituer une gaine exerçant une précontrainte sur la fibre optique, le procédé étant caractérisé en ce qu'il comprend :
- une étape de superposition des bords latéraux des bandes avec alignement des tranches des bandes, la superposition des bords étant réalisée de façon à obtenir, après la fixation des bords, une précontrainte déterminée sur la fibre optique,
- une étape de soudage des bandes entre elles de façon à unir les tranches adjacentes après superposition des bords latéraux, le soudage étant réalisé simultanément de chaque côté des bandes et avec le même apport d'énergie.

Le soudage est avantageusement réalisé par des faisceaux laser selon les tranches des bandes métalliques. Le soudage laser est en effet très approprié aux faibles épaisseurs des bandes métalliques.

Les faisceaux laser sont de préférence obtenus par dédoublement d'un faisceau laser initial. Ceci permet d'obtenir facilement des faisceaux d'égale énergie.

Les faisceaux laser sont de préférence pulsés ce qui permet de bien contrôler l'épaisseur de soudure.

Le soudage peut aussi être réalisé par microplasma, soit selon les tranches des bandes métalliques, soit sur les bords latéraux des bandes métalliques. Il est également possible d'utiliser le soudage à la molette.

L'invention a aussi pour objet un dispositif pour la mise en oeuvre de ces procédés, caractérisé en ce qu'il comprend des moyens de superposition des bords latéraux des bandes et d'application de la précontrainte, des moyens d'alignement des tranches des bandes, des moyens permettant la soudure simultanée des tranches de chaque côté des bandes.

Les moyens de superposition des bords latéraux des bandes et d'application de la précontrainte peuvent comprendre des galets de pressage des bords latéraux des bandes. Ces galets peuvent être situés de part et d'autre de l'ensemble constitué par les deux bandes métalliques.

Le dispositif peut comprendre en outre au moins un galet de maintien de la fibre optique.

Les moyens d'alignement peuvent comprendre des rouleaux, entre lesquels défilent les bandes métalliques.

L'invention a enfin pour objet un capteur à fibre optique précontrainte constitué de deux bandes métalliques superposées engainant une fibre optique, les bandes étant fixées l'une à l'autre selon leurs premiers bords latéraux et selon leurs seconds bords latéraux par des moyens de fixation pour constituer une gaine exerçant une précontrainte sur la fibre optique, caractérisé en ce que lesdits moyens de fixation sont constitués par des soudures continues réalisées sur les tranches alignées des bandes métalliques et faites de chaque côté des bandes avec le même apport d'énergie.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue en coupe transversale d'un capteur à fibre optique précontrainte,
- les figures 2 et 3 sont des vues respectivement de dessus et de côté d'une partie du dispositif selon l'invention,
- la figure 4 représente une première variante du système de soudure laser utilisable dans le cadre de l'invention,
- la figure 5 représente une seconde variante du système de soudure laser utilisable dans le cadre de l'invention.
- les figures 6 et 7 illustrent le procédé de soudage à la molette utilisable dans le cadre de l'invention,
- les figures 8 et 9 illustrent le procédé de soudage par microplasma utilisable dans le cadre de l'invention.

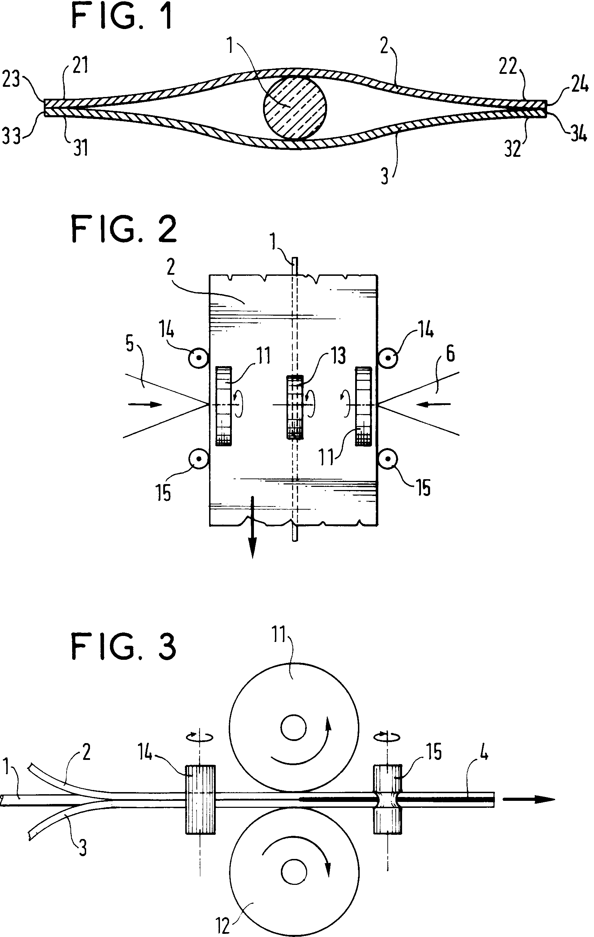

Un capteur à fibre optique précontrainte, tel que celui représenté en coupe transversale à la figure 1, comprend une fibre optique 1 placée au centre d'une gaine constituée par les deux bandes métalliques 2 et 3 fixées entre elles selon leurs bords latéraux. Ainsi le bord latéral 21 de la bande 2 est fixé au bord latéral 31 de la bande 3 et le bord latéral 22 de la bande 2 est fixé au bord latéral 32 de la bande 3. Cette fixation est faite de façon à assurer une précontrainte sur la fibre optique 1. La fibre optique et les bandes métalliques peuvent avoir les dimensions citées plus haut. Les bandes métalliques peuvent être en acier inoxydable ou en un autre matériau résistant bien à la corrosion.

On peut par exemple utiliser les matériaux suivants pour les bandes métalliques :
- l'alliage connu sous le nom INCONEL 625 commercialisé par Aubert et Duval qui comprend entre autres du nickel, du fer, du chrome et du molybdène;
- l'alliage connu sous le nom déposé HASTELLOY X commercialisé par Aubert et Duval qui comprend les mêmes constituants mais dans des proportions différentes;
- l'alliage connu sous le nom PHYNOX commercialisé par Imphy qui comprend entre autres du cobalt, du fer et du nickel;
- l'acier inoxydable Z2NCDU 25-20 commercialisé par Ugine qui est un acier fortement allié contenant 0,02 % de carbone, 25 % de nickel, 20 % de chrome, du molybdène, du cuivre, du silicium et du manganèse.

Selon l'invention, les bandes métalliques 2 et 3 sont soudées entre elles par des soudures unissant leurs tranches qui sont, pour chaque côté, alignées. Ainsi la tranche 23 de la bande 2 est alignée avec la tranche 33 de la bande 3 et la tranche 24 de la bande 2 est alignée avec la tranche 34 de la bande 3.

Etant donné les faibles épaisseurs des bandes métalliques, la soudure laser est une méthode de soudage particulièrement appropriée. Un faisceau laser pulsé à l'avantage de permettre un contrôle aisé de l'épaisseur de soudure par rapport à un faisceau laser continu.

L'utilisation de la méthode de soudage laser implique néanmoins certaines précautions.

Pour avoir une bonne soudure et éviter de dégrader la fibre, il faut que la distance entre les bords à réunir soit la plus faible possible. En effet, si le faisceau laser de soudage traverse la zone d'assemblage des deux bords, il peut altérer et même détruire la fibre optique.

Le dispositif selon l'invention pour la mise en oeuvre du procédé permet de réaliser des soudures sur tranches sans risque pour la fibre optique.

Les figures 2 et 3 illustrent le positionnement des bandes métalliques et de la fibre optique en vue du soudage laser selon les tranches des bandes. Les bandes 2 et 3 sont dévidées de leurs bobines support et entraînées par des galets de pressage supérieurs 11 et inférieurs 12 placés en bordure des bandes. Ces galets de pressage assurent la superposition des bords latéraux des bandes et induisent une tension transversale aux bandes. Il peut y avoir deux galets supérieurs et deux galets inférieurs, les axes de ces galets étant situés tous dans le même plan transversal par rapport aux bandes qui défilent horizontalement. Etant donné que les soudures se feront à proximités des galets de pressage, ceux-ci sont en matériau réfractaire, par exemple en céramique, élément qui résiste bien à la température. La périphérie des galets de pressage destinée à venir en contact avec les bandes peut être plate ou biseautée.

La distance séparant les galets de pressage des tranches des bandes peut être de quelques dixièmes de millimètres. Les galets supérieurs peuvent être montés sur des axes fixes et les galets inférieurs sur des axes amortis.

La fibre optique 1 peut être maintenue en position centrale par des galets de maintien 13 placés au-dessus et en-dessous de la fibre et selon les mêmes axes que les galets de pressage 11 et 12. La périphérie des galets de maintien peut être pourvue d'une gorge pour assurer un meilleur maintien. Les galets de maintien peuvent par exemple être en acier. La fibre optique est entraînée entre les bandes métalliques par tirage et/ou par le mouvement de rotation imposé aux galets de maintien. Les galets de pressage et de maintien peuvent être entraînés par une même chaîne cinématique.

L'alignement des tranches peut être obtenu par des rouleaux amont 14 et aval 15 animés d'un mouvement de rotation. La soudure s'effectuant entre les rouleaux amont et aval, il est préférable que les rouleaux aval possèdent une rainure transversale facilitant le passage d'éventuelles surépaisseurs provoquées par la présence du cordon de soudure.

Les vitesses de rotation des galets de pressage et de maintien ainsi que des rouleaux peuvent être harmonisées pour que les vitesses linéaires de leurs points de contact avec les bandes métalliques soient les mêmes. Ceci peut être obtenu de manière connue à partir d'une même chaîne cinématique.

La soudure des tranches est réalisée entre les galets de pressage 11 et 12 pour obtenir des cordons de soudure 4. Elle est réalisée au moyen des faisceaux laser 5 et 6.

Le soudage est réalisé simultanément sur les deux tranches au moyen de deux faisceaux laser de mêmes caractéristiques optiques, obtenus par dédoublement d'un faisceau laser pulsé issu soit d'une source CO₂, soit d'une source YAG.

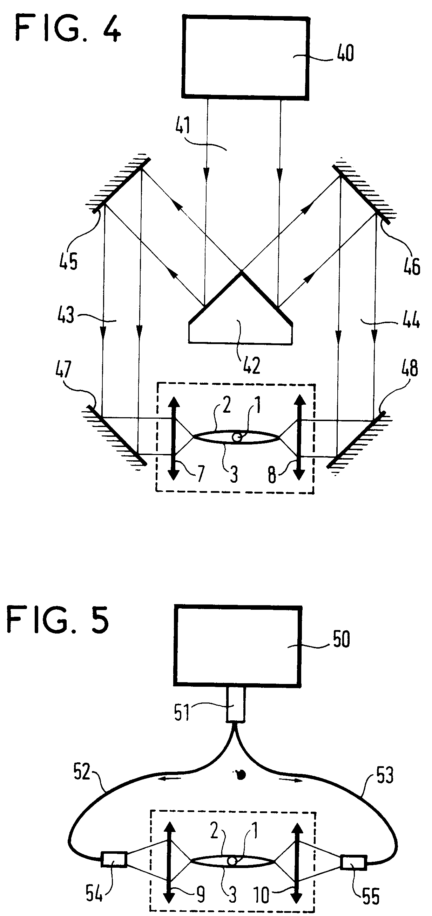

Selon la figure 4, le transport du faisceau et son dédoublement peuvent être réalisés par un système à miroirs. Ce système à miroirs est utilisé avec un laser CO₂ (longueur d'onde 10,6 µm). Le laser 40 émet un faisceau 41 qui est partagé par le miroir diviseur 42 en deux faisceaux identiques 43 et 44 qui sont dirigés par des miroirs 45, 46, 47 et 48 vers les lentilles de focalisation 7 et 8. Les lentilles 7 et 8 focalisent les faisceaux laser sur les tranches des bandes métalliques, de chaque côté de celles-ci.

L'utilisation de miroirs implique des positionnements précis. On peut s'affranchir de ces problèmes de positionnement en utilisant un laser Nd : YAG (longueur d'onde 1,06 µm) comme représenté à la figure 5. Dans ce cas, le laser 50 émet un faisceau qui est partagé en deux faisceaux identiques au moyen d'un séparateur 51 placé directement en sortie du laser. Ces faisceaux sont ensuite véhiculés par deux fibres optiques 52 et 53 vers des optiques 54 et 55 qui font diverger les faisceaux lumineux vers les lentilles de focalisation 9 et 10 qui focalisent les faisceaux laser sur les tranches des bandes métalliques, de chaque côté de celles-ci.

Le soudage laser constitue une méthode de fixation efficace pour les deux bandes métalliques. Si certaines caractéristiques (coût de production, rapidité de fabrication, simplicité, fiabilité, résistance mécanique de la soudure, etc.) sont définies comme prioritaires, d'autres méthodes d'assemblage peuvent être envisagées, tel le soudage à la molette ou le soudage microplasma. Ces deux procédés permettent d'obtenir, lors du soudage, une zone fondue uniforme sur les deux bandes, le plan de jonction des bandes étant sensiblement le plan de symétrie de la zone fondue.

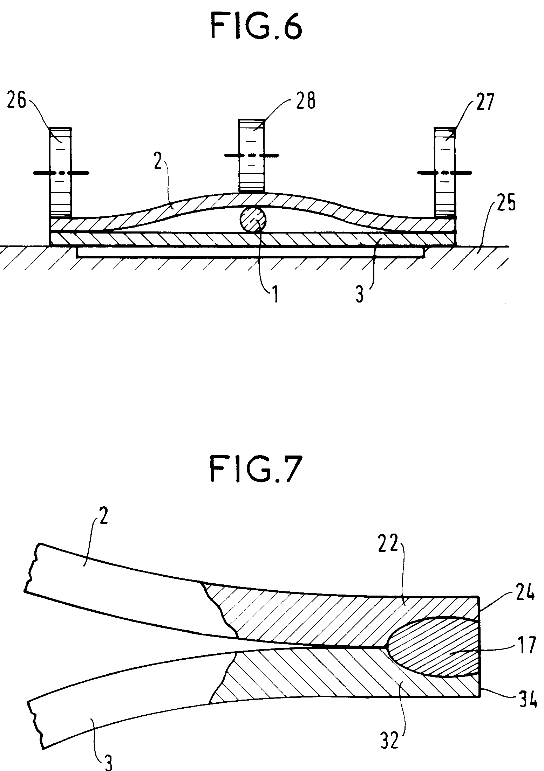

La figure 6 illustre une opération de soudage à la molette de bandes métalliques en vue d'obtenir un capteur à fibre optique précontrainte. L'ensemble constitué par les bandes métalliques 2 et 3 et la fibre optique 1 défile sur un support conducteur 25. Ce défilement peut être obtenu grâce à la rotation des molettes de soudage 26 et 27 pressant le bord des bandes superposées 2 et 3. L'alignement des tranches peut être obtenu par des rouleaux placés en amont et en aval des molettes comme pour les figures 2 et 3. L'alignement des tranches peut encore être obtenu par les molettes elles-mêmes si elles comportent un épaulement extérieur encadrant les tranches. Un galet 28 peut être utilisé afin de positionner la fibre 1.

Cette opération de soudage à la molette peut également être réalisée grâce à un jeu de quatre molettes comprenant deux molettes supérieures et deux molettes inférieures disposées à la façon des galets de pressage 11 et 12 des figures 2 et 3.

La figure 7 représente l'un des côtés du capteur après soudage. La zone soudée 17 lie les bords latéraux 22 et 32. On constate que la zone soudée 17 parvient jusqu'aux tranches 24 et 34 assurant ainsi l'étanchéité du capteur.

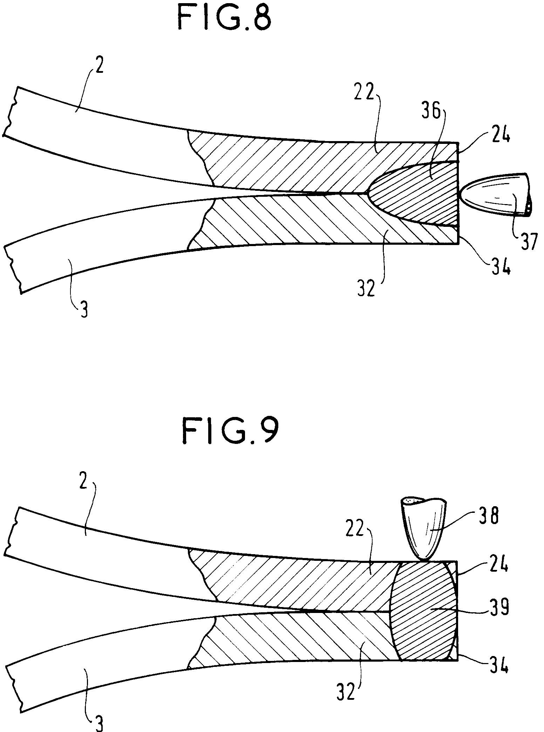

La figure 8 illustre une opération de soudage par microplasma de bandes métalliques en vue d'obtenir un capteur à fibre optique précontrainte. Comme pour le soudage laser, la soudure est obtenue à partir des tranches et simultanément de chaque côté du capteur. Elle est confinée dans l'espace 36. Le guidage des bandes métalliques, le maintien de la fibre optique et la pression exercée sur les bords latéraux peuvent être obtenus comme pour la méthode de soudage laser. La soudure est symétrique si l'arc 37 est situé dans le plan de joint des bandes 2 et 3.

Le soudage par microplasma peut être réalisé également à partir des bords latéraux et simultanément de chaque côté du capteur. Il faut s'assurer alors que l'arc 38 assurant la soudure soit suffisamment près des tranches 24 et 34 pour que la zone soudée 39 débouche jusqu'aux tranches 24 et 34. Les bandes métalliques étant suffisamment minces et le gradient thermique engendré par l'arc lors du soudage microplasma n'étant pas trop élevé, la soudure obtenue est bien symétrique par rapport au plan de joint des bandes 2 et 3.

## Revendications

**1)** Procédé d'obtention d'un capteur à fibre optique précontrainte, le capteur comportant deux bandes métalliques (2, 3) superposées engainant une fibre optique (1), les bandes étant fixées l'une à l'autre selon leurs bords latéraux (21, 31 et 32, 34) pour constituer une gaine exerçant une précontrainte sur la fibre optique, le procédé étant caractérisé en ce qu'il comprend :
- une étape de superposition des bords latéraux des bandes avec alignement des tranches (23, 33 et 24, 34) des bandes, la superposition des bords étant réalisée de façon à obtenir, après la fixation des bords, une précontrainte déterminée sur la fibre optique,
- une étape de soudage des bandes entre elles de façon à unir les tranches adjacentes après superposition des bords latéraux, le soudage étant réalisé simultanément de chaque côté des bandes et avec le même apport d'énergie.

**2)** Procédé selon la revendication 1, caractérisé en ce que le soudage est réalisé par des faisceaux laser (43, 44) selon les tranches des bandes métalliques.

**3)** Procédé selon la revendication 2, caractérisé en ce que lesdits faisceaux laser (43, 44) sont obtenus par dédoublement d'un faisceau laser primitif (41).

**4)** Procédé selon l'une des revendications 2 ou 3, caractérisé en ce que les faisceaux laser sont pulsés.

**5)** Procédé selon la revendication 1, caractérisé en ce que le soudage est effectué à la molette.

**6)** Procédé selon la revendication 1, caractérisé en ce que le soudage est effectué par microplasma.

**7)** Procédé selon la revendication 6, caractérisé en ce que le soudage microplasma est effectué selon les tranches des bandes métalliques.

**8)** Procédé selon la revendication 6, caractérisé en ce que le soudage microplasma est effectué sur les bords latéraux des bandes métalliques.

**9)** Dispositif pour la mise en oeuvre du procédé selon la revendication 1, caractérisé en ce qu'il comprend des moyens de superposition des bords latéraux des bandes, des moyens d'alignement des tranches des bandes, des moyens permettant la soudure simultanée unissant les tranches de chaque côté des bandes.

**10)** Dispositif selon la revendication 9, caractérisé en ce que les moyens de superposition des bords latéraux des bandes comprennent des galets de pressage (11, 12) des bords latéraux des bandes.

**11)** Dispositif selon l'une des revendications 9 ou 10, caractérisé en ce que les galets de pressage des bords latéraux des bandes comprennent des galets situés de part et d'autre de l'ensemble constitué par les deux bandes métalliques.

**12)** Dispositif selon l'une quelconque des revendications 9 à 11, caractérisé en ce qu'il comprend en outre au moins un galet de maintien (13) de la fibre optique.

**13)** Dispositif selon l'une quelconque des revendications 9 à 12, caractérisé en ce que les moyens d'alignement comprennent des rouleaux (14, 15) entre lesquels défilent les bandes métalliques.

**14)** Dispositif selon l'une quelconque des revendications 9 à 13, caractérisé en ce que les moyens de soudure comprennent un laser (40) délivrant un faisceau primitif (41) qui est dédoublé en deux faisceaux (43, 44) d'égale énergie.

**15)** Dispositif selon la revendication 14, caractérisé en ce que le dédoublement du faisceau primitif est obtenu par un système à miroirs (42, 45, 46, 47, 48).

**16)** Dispositif selon la revendication 14, caractérisé en ce que le dédoublement du faisceau primitif est obtenu par un système à fibres optiques (52, 53).

**17)** Capteur à fibre optique précontrainte constitué de deux bandes métalliques (2, 3) superposées engainant une fibre optique (1), les bandes étant fixées l'une à l'autre selon leurs premiers bords latéraux (21, 31) et selon leurs seconds bords latéraux (22, 32) par des moyens de fixation pour constituer une gaine exerçant une précontrainte sur la fibre optique, caractérisé en ce que lesdits moyens de fixation sont constitués par des soudures continues réalisées de façon à unir les tranches (23, 33 et 24, 34) alignées des bandes métalliques, ces soudures étant faites de chaque côté des bandes avec le même apport d'énergie.
